(19)

Europäisches
Patentamt

European
Patent Office

Office européen
des brevets

(11) **EP 2 630 292 B1**

(12) **EUROPEAN PATENT SPECIFICATION**

(45) Date of publication and mention
of the grant of the patent:
**14.01.2015 Bulletin 2015/03**

(21) Application number: **11776475.3**

(22) Date of filing: **17.10.2011**

(51) Int Cl.:
**D21C 11/06** *(2006.01)*     **D21C 11/10** *(2006.01)*

(86) International application number:
**PCT/FI2011/050905**

(87) International publication number:
**WO 2012/052619 (26.04.2012 Gazette 2012/17)**

(54) **METHOD AND ARRANGEMENT FOR SEPARATING CONTAMINANTS FROM LIQUIDS OR VAPORS**

VERFAHREN UND ANORDNUNG ZUR  ENTFERNUNG VON  VERUNREINIGUNGEN AUS FLÜSSIGKEITEN ODER GASEN

MÉTHODE ET ARRANGEMENT POUR LA SÉPARATION DE CONTAMINANTS DE LIQUIDES OU DE VAPEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.10.2010  FI 20106079**

(43) Date of publication of application:
**28.08.2013   Bulletin 2013/35**

(73) Proprietor: **Andritz Oy**
**00180 Helsinki (FI)**

(72) Inventors:
• **BERG, Carl-Gustav**
  **FI-02700 Kauniainen (FI)**
• **JAAKKOLA, Heikki**
  **FI-00270 Helsinki (FI)**

(74) Representative: **Hoffmann Eitle**
**Patent- und Rechtsanwälte PartmbB**
**Arabellastraße 30**
**81925 München (DE)**

(56) References cited:
**WO-A1-00/01879        WO-A1-99/37853**
**US-A- 5 759 345        US-A1- 2005 098 037**

**Description**

TECHNICAL FIELD

The present invention relates to a method and arrangement for separating contaminants from liquids, such as condensates, or vapors in an evaporation plant.

BACKGROUND OF THE INVENTION

Methanol (MeOH) is one of the most important causes of chemical- (COD) and biological- (BOD) oxygen demand in biomass effluent streams or black liquor streams. Tightening environmental regulations make active methanol segregation and control essential. Alkaline cooking of wood chips at pulp mills forms normally 5-20 kg MeOH /t pulp, and methanol is hence found in varying amounts in all off-streams from the cooking plant, the most important being weak black liquor stream. Weak black liquor is an essential stream for producing reusable clean water because it simultaneously forms the key energy source in the pulp mill when it is concentrated by evaporation into so called firing black liquor and then burned in the recovery boiler. The modern recovery process can produce in a state of art pulp mill an excess of both heat and electricity.

The water removed from weak black liquor in the evaporation plant can contain a lot of volatile compounds like methanol, ethanol, acetone, turpentine and a number of sulphuric compounds: All these components are then partially contained in the firing black liquor but most of them are separated into secondary condensates and non-condensable off-gases.

Modern separation processes in evaporators have as a target to segregate secondary condensates so that most of the methanol is enriched in one relatively small condensate fraction (often called foul condensate), which can be purified with acceptable costs. The concentrated methanol and other volatile organic compounds can then be combusted in the recovery boiler, dedicated non-condensable gas incinerator or in the lime kiln. This, in turn, reduces the environmental impact of biomass-based methanol and also methanol accumulation when reducing fresh water consumption.

Modern pulp mills have a high degree of process integration, and black liquor evaporation is a very essential part of modern chemical-, water- and energy circulation. This has also been proven by modern pulp mills having a multi-effect evaporator train in the center of the pulp mill.

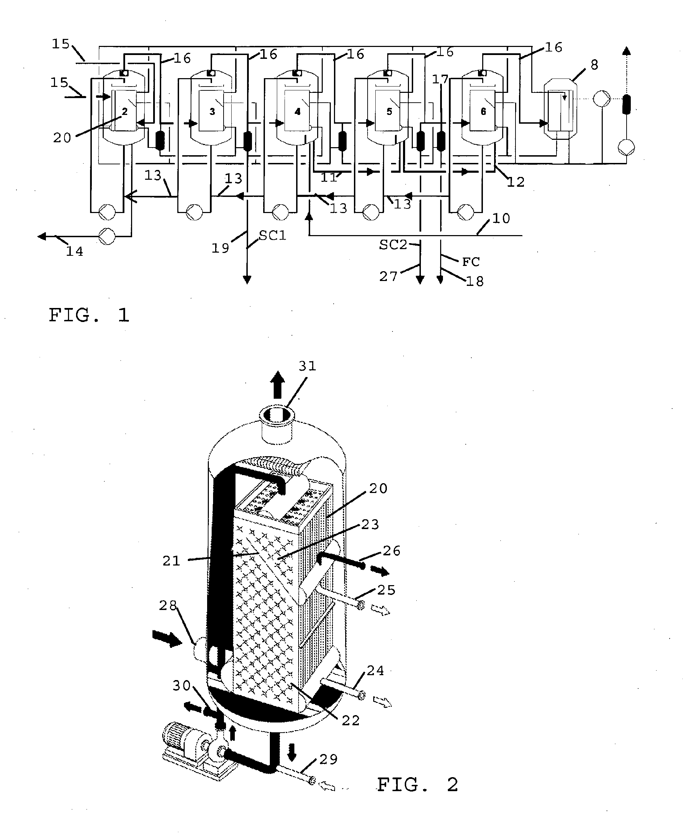

The black liquor evaporation plant typically comprises a multiple-effect evaporation plant with 3 to 7 effects (Fig. 1). Multiple-effect evaporation is in use in almost all sulphate pulp mills. The steam sequence is straight downstream. This is almost always the case. Live steam comes from the mill's low-pressure steam distribution system at a pressure of 0.35-0.45 MPa (absolute). This corresponds to a saturation temperature of 139 °C - 148 °C. The live steam is fed into the heating elements of the first effect (not shown in Fig. 1). Vapor generated in the liquor side of effect 1 is led through lines 15 into the heating elements of effect 2 and from there into effect 3 and so on as indicated by lines 16. Finally, vapor from the last effect 6 at a temperature of 57 °C - 60 °C condenses in a surface condenser 8. In almost all cases the steam flow sequence is numbered so that it goes from effect 1 to next effect numbered as effect 2 and so on and the black liquor typically flows in the opposite direction. In Fig. 1 the heating element of the evaporators is a lamella formed of two plates attached to each other. Liquid to be evaporated is falling on the outer surface of the lamella, and a heating medium, such as vapor, flows inside the lamella. This is described in more detail in Fig. 2.

Several possibilities exist to arrange the liquor flow sequence in the evaporation plant. The optimum number of effects depends on the steam balance of the mill with boundary conditions like electricity production, electricity price, etc. Saving steam is not always economical and mill-wide cost calculations are needed to find out the best solution case by case. The application in Figure 1 is typical for a northern pulp mill using softwood as raw material.

The concentrator effect 1 is usually divided into several subunits, which are parallel in the steam side and in series in the liquor side. For the liquor side the typical sequence is a backward- or mixed feed sequence. If the feed temperature is higher than the temperature in the last effect and the backward feed pattern is preferred, the liquor has to be flashed before feeding it to the last effect. The flashed steam from hot weak liquor is then mixed with suitable secondary steam flows giving latent heat to colder effects. The black liquor flow is indicated in Fig. 1. Weak black liquor (or other cellulose pulp waste liquor) in line 10 is fed into effect 4, where the liquor flashes. Then the liquor is passed via line 11 to effect 5, where it is further flashed. From effect 5, the liquor is passed via line 12 to effect 6 for evaporation. The liquor is further evaporated in effects 5, 4, 3, 2 as indicated by line 13. The evaporated liquor in line 14 is withdrawn from effect 2 and fed to effect 1 (not shown), in which the product liquor for burning in a recovery boiler is formed.

BOD (Biological Oxygen Demand) and COD (Chemical Oxygen Demand) load to a waste water treatment plant can be greatly reduced by cleaning and segregating secondary condensate properly within the evaporation system. And when the quality of the secondary condensate is sufficient, all condensate can be used in the mill processes replacing fresh water intake. This remarkably reduces the environmental load.

Thanks to effective droplet separation, secondary condensate from modern evaporators contains very little salts, typically 5 - 10 mg Na/l in for hardwood applications. All volatile components (methanol, total reduced sulphur (TRS) - compounds) from black liquor can be effectively separated from secondary condensate in the evaporator plant.

In modern evaporators secondary condensate can be fractionated inside lamellas to clean and foul condensates fractions (see Figures 1 and 2). The generated foul condensate is typically further processed by steam stripping. A stripping process produces stripped (clean) condensate and liquid methanol fuel. Fractionating in each effect is selected to maximize the methanol recovery while minimizing the foul condensate flow. Foul condensate amount from the evaporator plant is typically ca 15 % of the total condensate amount and can give an overall methanol recovery of 70 - 80 %. The present (duct stripping) invention can help to increase the methanol capture close to 100% when combined with evaporators that have internal condensate segregation. The condensate segregation is described below.

The vapor space inside the lamellas 20 is divided by diagonal welding seams 21 to lower 22 and upper 23 sections (Fig. 2). Most of the water vapor fed to the evaporator through line 28 is condensed in the lower section producing clean condensate 24. A smaller fraction of the vapor together with most of the methanol and TRS-compounds is condensed in the upper section 23 and collected as foul condensate 25. The foul condensate section area is 5 - 30 % of the lamella surface, the highest in back end evaporator effects. Vent vapor is discharged from conduit 26. Liquor to be evaporated is introduced through line 29 and evaporated liquor is discharged via line 30. Vapor generated in the evaporator is taken out via line 31.

Fractionating in each effect is selected to maximize the methanol recovery while minimizing the foul condensate flow. The foul condensate amount from the evaporator stages is normally varying from 5 to 30 % of the total condensate. In the evaporator shown in Fig. 2, the portion of the foul condensate is 10 % of the total vapor flow in and its MeOH mass flow out stands for 80 % of the total mass flow in of MeOH. The corresponding figures of the clean condensate out are 89 % of total vapor mass flow in and the MeOH flow out equals 10 % of total mass flow in of MeOH, and the vent vapor is 1 % of total vapor mass flow in and its MeOH mass flow out stands for 10 % of total mass flow in of MeOH.

Depending on condensate quality and methanol recovery requirements, the number of segregating effects and segregation area can be freely selected in evaporators. Secondary condensate fractions in a 6-effect evaporator are shown in Fig. 1. The 6-effect evaporator shown in figure 1 has segregation in effects 2 through 6 and in the surface condenser. Corresponding condensate flows and compositions are indicated in Table 1.

In Figure 1 the foul condensates formed in effects 2, 3, 4, 5 are collected into a flash tank 17 and discharged through line 18. The foul condensates (FC) from the surface condenser 8 and effect 6 are also led to line 18. The clean condensates from effects 2, 3 and 4 are discharged through line 19 as secondary condensate 1 (SC1). The clean condensates from effects 5, 6 and the surface condenser 8 are discharged through line 27 as secondary condensate 2 (SC2).

Foul condensates are typically cleaned with steam in a stripping column (stripper), which is a cylindrical vessel where the liquid for stripping flows down by gravity and steam rises upward. The mass transfer process is enhanced by intermediate bottoms in the column that divide the heating and degasification of the liquid in stages. The foul condensate stripper is placed between evaporation effects 1 and 2 or 2 and 3. Secondary vapor from a previous effect is used as a heat source in the stripper. The succeeding effect has a dedicated lamella package where vapor from the top of the stripper, enriched with MeOH and TRS-compounds, is partly condensed (inside) and black liquor evaporated (outside). Non-condensed vapor is further partially condensed in a liquor preheater and the rest of stripper gases flow through a trim condenser. The MeOH content in Stripper Off Gases (SOG) is adjusted to about 30% if the gases are further processed into liquid methanol, or to approximately 30 to 50% if the gases are incinerated in a gas phase. The stripped clean condensate from the stripper bottom can be combined with clean secondary condensate.

Stripper off gases can be fired (in a dedicated non-condensable gas incinerator / lime kiln / recovery boiler) or rectified in a methanol column to liquid methanol. Liquefied methanol which can be stored and then fired in a controlled fashion has normally a water content of ca 20% and is a good fuel giving ca 15 MJ/kg.

Integrated foul condensate stripping has a major advantage over alternative systems: all energy required to clean the foul condensate can be utilized in the evaporator and stripping does not appreciably decrease the evaporator economy.

Table 1. Condensate quality from the evaporator in Figure 1.

|  | Flow % of total condensate | Methanol mg/l | TRS mg/l | Remarks |
|---|---|---|---|---|
| SC1 | 41 | 25 | < 5 | |
| SC2 | 44 | 425 | < 10 | Slightly odorous |
| FC foul condensate | 15 | 6000 | < 200 | Malodorous |

(continued)

|  | Flow % of total condensate | Methanol mg/l | TRS mg/l | Remarks |
|---|---|---|---|---|
| Stripped foul condensate | 15 | 300 | < 5 | Stripper MeOH purification efficiency = 95% |

Internal and external segregation is combined in some known processes. Honkanen et al. patented a method in US 6,797,125, where foul condensates from a previous effect are flashed in a stripper. The pure condensate fraction from evaporator D is purified in the stripper by the flashed vapors and the resulting high purity condensate fraction is taken out from the bottom of the stripper.

Olausson et al. (6) presented a following method in US 6,258,206. In an evaporator train, where internal segregation is used, foul condensate fraction from effect 1 is fed to the upper part of the steam side of the effect 2. The clean condensate fraction from effect 3 is circulated to the lower part of effect 2 steam side. MeOH and other VOC's are concentrated into the dirty fraction from the last effect. When condensates of different purity are fed into the steam side, the least contaminated condensate is first stripped by the clean secondary vapor, which collects impurities but is still capable of purifying the more contaminated condensate in the upper part of the heat transfer section.

The most fouled condensate fraction is routed into a condensate treatment plant. A condensate treatment plant is typically integrated with the evaporator train, and it comprises a stripping column, a 2-effect evaporator, a MeOH-liquefaction column and a terpene decanter.

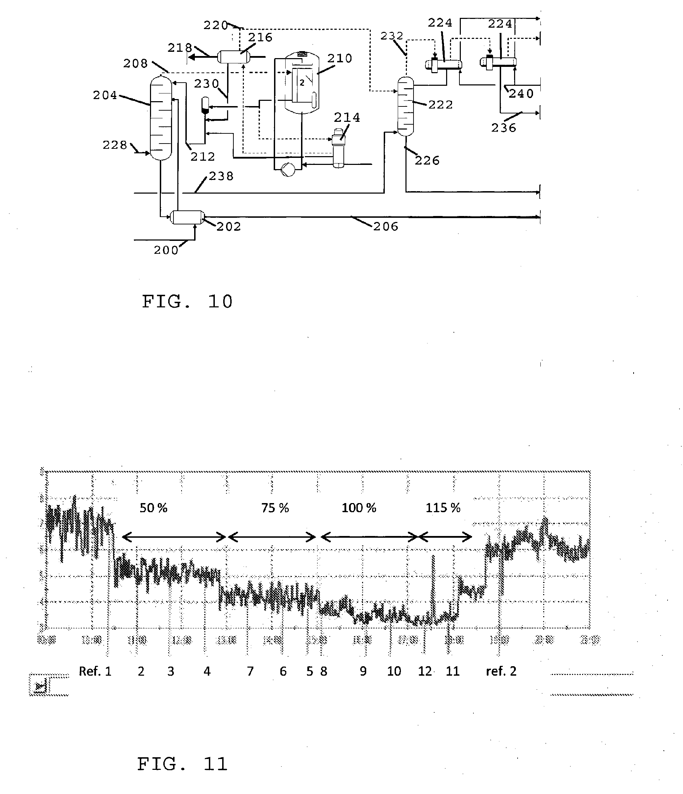

In a typical arrangement presented in Figure 10, foul condensate in line 200 is first preheated in a preheater 202 with stripped condensate in line 206 from the bottom of the stripping column 204. A stripping column 204 is a tray-column, where typically secondary vapor from effect 1 in line 228 is used to remove impurities from the condensate. Contaminated stripper overhead vapor 208 is used for heating the second effect 210 in a separated heat transfer section, and condensate is flashed and recycled back to the stripping column via line 212 as a reflux. Non-condensable gases (NCG) from the second effect's separated heat transfer area can be used for preheating (in a preheater 214) liquors between effects 2 & 3. All the NCG's and flashed vapors are finally routed to a trim condenser 216, where the final condensation is done by cooling water in line 218. The resulting condensates in line 230 are mixed with the stripper reflux stream. The NCG's from the trim condenser 216 can be combusted in the recovery boiler, in the lime kiln or in a dedicated NCG incinerator. Another option is to strip NCG's (in line 220) with vapor 238 in a MeOH column 222. The overhead vapor 232 from the MeOH column is partially condensed in condenser 224 with cooling water 240 to liquid MeOH, which is taken out via line 236. Terpenes can be separated in a terpene decanter in softwood plants. The bottom stream from the MeOH column and condensed overhead vapors from the condensate stripper can be fractioned in a decanter system.

BRIEF DESCRIPTION OF THE INVENTION

There is a desire to improve separation of contaminants, such as methanol and TRS, from liquid flows, such as evaporation condensates, or vapor flows at an evaporation plant. The new method and arrangement can be practiced at a pulp mill, but they are not limited thereto. An objective of the invention is to enhance the separation of contaminants, by stripping of contaminants such as methanol and TRS, from liquid (secondary condensate) in droplets or liquid film into evaporation vapors by optimizing the net mass and heat transfer in a vapor duct. It has been found that this can be done by spraying liquids, such as secondary condensates, into evaporator vapor streams. The liquid cleaned by the new method is called a duct stripped liquid.

Stripping of liquid in a vapor duct is more favorable than treating secondary condensate directly in a stripper column, at least in such cases when there is a need to pre-treat e.g. large flows of secondary condensate, or when the duct-stripped secondary condensate flow can be used directly as a hot fresh water replacement, or when duct-stripped condensate is added to a cleaner secondary condensate fraction which is so clean that it does not at all need to be treated in the stripper column. Duct-stripping is hence primarily used to minimize the flow of foul condensate or secondary condensates to the stripper column, which in turn minimizes the heat energy consumption of the stripper column. Duct-stripping can also be used for producing clean condensate that can be used as replacement for hot fresh water.

According to the inventive method of the present invention contaminants are separated from liquids by means of stripping by bringing a liquid into a direct contact with a vapor at an evaporation plant, so that a contaminated liquid is sprayed into vapor flowing in a vapor duct, thus reducing the contaminant content of the sprayed liquid and producing a cleaned liquid such that contaminants are enriched in the vapor. The cleaned liquid is collected from a process point of view in the most beneficial part of the vapor duct. The described enrichment of contaminants in vapor is called stripping.

According to the inventive method of the present invention contaminants are separated also from vapors by bringing a liquid into direct contact with a contaminated vapor at an evaporation plant by spraying or distributing a contaminant-leaner liquid into the vapor flowing in a vapor duct or onto wall surfaces of the duct thus increasing the contaminant content of the sprayed liquid and producing a cleaned vapor, and collecting the contaminant-enriched liquid. The described enrichment of contaminants in liquid is called absorption. Particles and/or carry-over components, such as acids and alkalis, can be separated from vapors.

The inventive arrangement is disclosed for purification of liquids or vapors at an evaporation plant having at least one evaporator vessel equipped with a vapor duct. According to a preferred embodiment the vapor duct is provided with a device for spraying or distributing a liquid into the vapor flowing in the vapor duct or onto wall surfaces in the vapor duct in order to bring the liquid into direct contact with the vapor thus reducing the contaminant-content of the liquid or the vapor.

A vapor duct is a duct which is connected to an evaporator and through which vapor formed in the evaporator is led out. The duct can be arranged so that the vapor is led to another evaporator vessel, back to the same evaporator or to a further process stage. Separation of contaminants, either by stripping or absorption, can be enhanced by prolonging the residence time of the liquid, such as condensate, in the duct. Separation is favored when the vapor duct gas volume and the wet area (i.e. droplet area + film area) is as large as possible. This means that some evaporator applications can be more suited for duct stripping than others. Other important variables affecting separation efficiency are spray properties and direction of secondary condensate.

Separation of contaminants can be enhanced by heating the sprayed liquid to saturation temperature or 5 to 10°C above saturation temperature of the vapor before spraying.

In the novel method different kinds of contaminants can be separated from liquids. According to a preferred embodiment the contaminants are methanol and /or TRS (total reduced sulphur) compounds, which are common volatile contaminants in condensates at a pulp mill. Typically said liquid to be sprayed is condensate and said contaminants are at least one of methanol and TRS.

A contaminated liquid, such as methanol or/and TRS enriched liquid, can be sprayed either co-currently to the vapor flow or countercurrently to the vapor flow in the vapor duct, or any other direction compared to the vapor flow.. Countercurrent gives often higher separation.

According to an embodiment of the invention a contaminant (methanol and/or TRS) -enriched condensate is formed in a multi-effect evaporation plant, and the condensate is sprayed into a vapor duct from the same evaporator where the condensate comes from, or from a preceding or a succeeding evaporator. A contaminated liquid, such as methanol or/and TRS -enriched liquid, can be cleaned both in evaporator processes that are multi-effect plants or single effect plants like vapor recompression plants run by a fan or steam ejector.

The cleaned liquid can be used as replacement liquid for fresh water within the mill.

The method according to the present invention is applicable to all known evaporator applications.

In the present method contaminated liquid or vapor can be treated both at low pressure or elevated vapor pressure.

Preferably the collection point of the cleaned/contaminated liquid (such as condensate) in vertical vapor ducts is located after a curve at the bottom of the vapor duct outlet.

A contaminant-enriched liquid can also be waste liquors coming from any wood-based pulping process, or waste liquors or effluent streams (such as a sludge stream) coming from any biomass process.

Duct stripping can be used to clean waste liquor condensate contaminants from any biomass-based pulping process. The novel method can also be used as a method of absorbing contaminants from a contaminated vapor flow at an evaporation plant of any biomass process producing fuel, food or chemicals. The arrangement for carrying out of the novel method can be easily installed in both new and existing evaporation plants. The main components are some additional pipe lines and connections for leading liquid to a suitable vapor duct.

The liquid is preferably supplied via a feed pipe which extends through the vapor duct wall to the vapor duct and which is provided with at least one nozzle so that the liquid is sprayed as drops to the vapor flow. In case there are several nozzles, they are evenly distributed over the width of the duct. The liquid can also be sprayed via openings in the form of nozzles which are arranged for supplying liquid from the inner wall of the duct around the duct. The liquid can also be fed through such openings in the duct wall, whereby the liquid is distributed to the duct so that it flows as a film along the inner wall of the duct. The openings are arranged around the duct periphery.

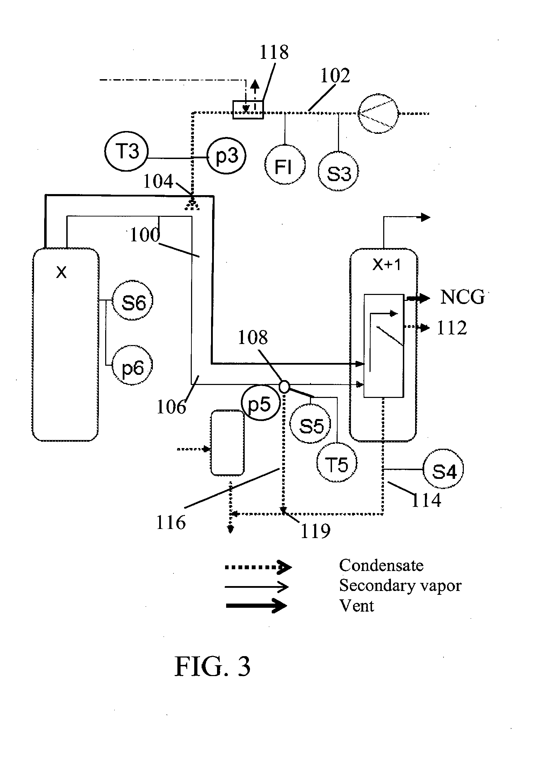

Crucial variables for a well working duct stripping or absorption system are the mass flow of vapor and dirty (or clean) condensate ($m_6, m_3$), pressure drop over the spray nozzle ($p3$-$p5$), nozzle characteristics, (i.e. spray geometry (hollow cone or full cone), droplet size distribution (average diameter), opening angle of spray ($\alpha$), velocity of the droplets ($w_d$)), droplet temperature and vapor saturation temperature ($T3, p6$), droplet and vapor velocity ($w_d, w_v$), residence time in the duct ($\tau$), duct geometry, vapor and liquid equilibrium (x and y), interfacial equilibrium (net mass transfer of water vapor or not, this influences the methanol transport), heat and mass transfer both inside the droplet and on the duct walls (influences net mass transfer of water vapor), see Table 2 and Figure 3 for nomenclature. Favorable operation is obtained when using commercial nozzles producing droplets smaller than 5 mm and opening angles from 20° to 180°.

Separation is further favored when the vapor duct gas volume and the wet area (=droplet area + film area) is as large as possible. Suitable nozzle size and number of nozzles depend on the size of the process as well as on the volume flow of the sprayed liquid.

The film area in the duct can be increased with internal duct elements. The film area can be increased, for example, with a pipe inside the vapor duct. The internal duct element has a simple structure. It does not have a considerable effect on the flow patterns of liquid or gas, or cause a considerable pressure loss. No fill elements which are used in packed towers are used, but the cross-section of the vapor duct is essentially free for the vapor flow.

Table 2: Crucial process variables; see figure 3 for their locations

| S3, m3 | Dirty (or clean condensate) from the nozzle pump |
|---|---|
| S4 | CC, Clean condensate from x+1-effect lamella |
| S5, T5, p5 | Sprayed condensate before x+1-effect lamella |
| S6, p6,m6 | Secondary vapor from x-effect |
| p3, T3 | Sprayed condensate after heating or cooling spraying fluid |
| DSL | Outtake of duct-stripped liquid (gravity and centrifugal forces collects liquid at pipe bottom before inlet to next evaporator) |
| NCG | Non-condensable gazes |
| FC | foul condensate |

It is beneficial to design the duct stripping system so that the net mass transfer rate of methanol is maximized by optimizing the previously listed crucial variables to be as cost effective as possible, still establishing maximum separation, e.g. close to 100% methanol removal, see the example below. A removal close to 100% can be obtained by utilizing this invention.

BRIEF DESCRIPTION OF THE DRAWINGS

The inventive method and arrangements will be described further with reference to the accompanying drawings in which

Figure 1 shows schematically a known multi-effect evaporation plant of black liquor;
Figure 2 illustrates the structure of a known lamella evaporator, in which condensate segregation into clean and foul condensate takes place;
Figure 3 shows schematically a duct stripping arrangement according to the present invention;
Figures 4 and 5 illustrate schematically the test arrangement for the present invention: Figure 4 is a principal drawing for experimental setup and Figure 5 shows sample points as well as measurement points of field tests; and
Figures 6-9 show test results of the present invention.
Figure 10 illustrates an integrated foul condensate stripper and liquid methanol plant.
Figure 11 shows conductivity test results of secondary condensate 2, at 80% evaporation capacity.

DETAILED DESCRIPTION OF THE PRESENT INVENTION

An arrangement for carrying out the novel stripping process is shown in Figure 3. Effects x and x+1 of a multi-effect evaporation plant are shown. These effects can be, for example, effects V and VI, of the black liquor evaporation plant. Black liquor is evaporated in effect x so that vapor is formed. The vapor is led through a duct 100 to the next effect x+1. Dirty condensate containing methanol and other volatile compounds is led through line 102 and sprayed by means of a nozzle or nozzles 104 to the vapor duct 100. Condensate drops come into direct contact with vapor so that methanol and other contaminants are taken up by the flow of vapor. Cleaned condensate, called duct-stripped condensate, is running downwards along the wall of the vapor duct and is preferably collected after a curve 106 at the bottom 108 of the vapor duct before the inlet of effect x+1. The vapor having an increased content of volatile contaminants flows in the duct 100 to the next evaporation effect x+1 where it is condensed. The heating element of the effect x+1 is a lamella 110 as described in connection with Figure 2, whereby condensate segregation takes place and clean 114 and foul 112 condensates are formed in the lamella 110. The foul condensate can be further treated in a stripping column plant of the mill. The duct-stripped condensate in line 116 can be pumped from the vapor duct 100 directly to a process where it is used as process water. The duct-stripped condensate and the clean condensate 114 can also be combined, but this depends on their content of contaminants, such as methanol, and optimal use of condensates in a further process.

The foul condensate can be heated directly or indirectly in a heat exchanger 118 before spraying to the vapor duct 100. The heating contributes to the stripping effect in the duct.

Field tests at a full scale pulp mill evaporator plant were carried our. Methanol and COD (chemical oxygen demand) analyses from full scale mill trial with condensate having a high methanol content were performed by VTT Expert Services Oy in Espoo, Finland. MeOH was analyzed with GC-FID gas chromatography and COD with standardized SFS 5504:1988 titration method. MeOH and COD -removals were calculated from the equation:

$$removed\_MeOH\_or\_COD = \frac{S3-S5}{S3} \qquad [1]$$

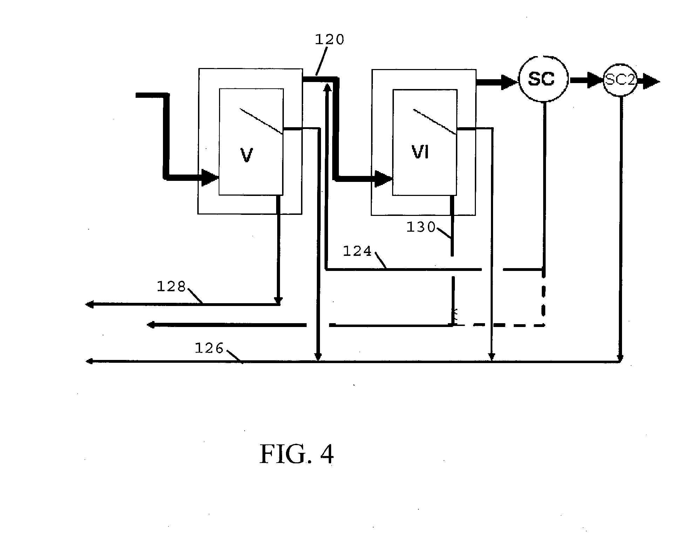

where S3 and S5 are analyzed ( MeOH and COD concentrations at sample points S3 and S5, see Figures 3 and 4). It is assumed that a small change in the droplet mass does not affect the result. None of the experiments exceeded equilibrium removal. The uncertainty of methanol measurement is seen as a bigger variation in removed methanol compared to COD removal.

Fig. 4 illustrates two black liquor evaporators V and VI. Vapor formed in effect V is led through a vapor duct 120 to effect VI. Condensate SC and SC1 are produced in the surface condenser as described in connection with Fig.1. The condensate SC is led through line 124 and sprayed to the vapor duct 120. Foul condensate from the evaporation effects and surface condenser are led through line 126 and secondary condensate from effect V through line 128. The duct-stripped condensate is led to effect VI and discharged therefrom together with secondary condensate formed in effect VI to line 130.

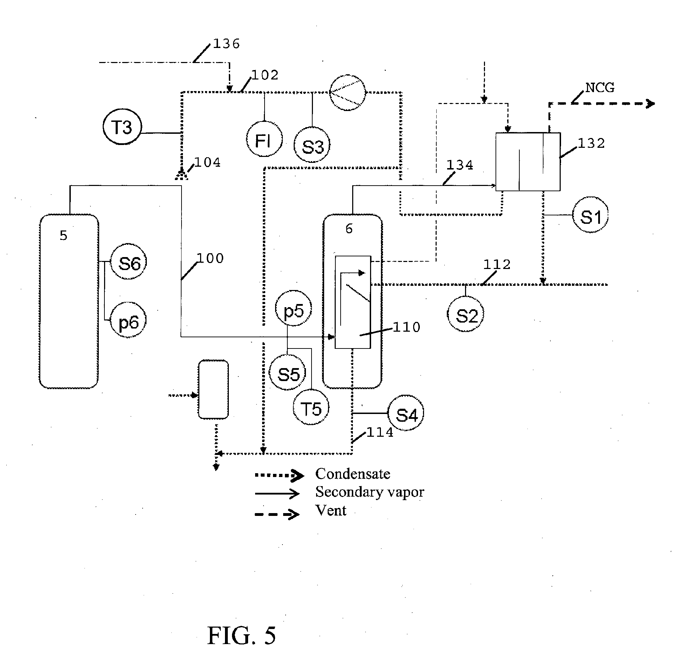

Foul condensate was sprayed into a vapor duct from effect V of the black liquor evaporation plant: The test runs were performed at an evaporation plant running on either 80% or 100% capacity. The evaporation plant was kept in steady state during test trials; the test trial process is described in Figures 4 and 5.

In Figure 5 effects x and x+1 of a multi-effect evaporation plant of Fig. 3 are shown. These effects are effects V and VI, of the black liquor evaporation plant. Black liquor is evaporated in effect 5 so that vapor is formed. The vapor is led through a duct 100 to the next effect 6. Foul condensate containing methanol and other volatile compounds from a surface condenser 132 where vapor in line 134 from effect 6 is condensed is led through line 102 and sprayed by means of a nozzle or nozzles 104 to the vapor duct 100. Condensate drops come into direct contact with vapor so that methanol and other contaminants are taken up by the flow of vapor. Cleaned condensate, called duct-stripped condensate, is running downwards along the wall of the vapor duct 100 and is preferably collected through the bottom of the effect 6. The vapor having an increased content of volatile contaminants flows from the vapor duct 100 into the heating element of the next evaporation effect 6 where it is condensed. The heating element of the effect 6 is a lamella 110 as described in connection with Figure 2, whereby condensate segregation takes place and clean 114 and foul 112 condensates are formed in the lamella 110. The foul condensate in line 112 can be further treated in a stripping column plant of the mill. The duct-stripped condensate is led to effect 6 and further together with the vapor condensate from the succeeding evaporator 6 through line 114 to a process where it can be used as process water.

The foul condensate can be heated directly in line 102 by adding steam from line 136 before spraying to the vapor duct 100. The heating contributes to the stripping effect in the duct.

Sampling locations and measurements for figure 5 are presented in table 3.

Table 3: Sampling- & measurement locations shown in Figure 5

| | |
|---|---|
| Sample 1 | Foul condensate from surface condenser |
| Sample 2 | Foul condensate from 6 effect lamella |
| Sample 3 | Condensate from the pump |
| Sample 4 | Clean condensate from 6-effect lamella |
| Sample 5, T5, p5 | Sprayed condensate before 6-effect lamella |
| Sample 6, p6 | Secondary vapor from 5-effect before droplet separator |
| T3 | Sprayed condensate after heating of spraying fluid |
| U pipe (second runs) | dp measurements between p5 & p6 |
| S7 (second runs) | secondary condensate 2 |
| S8 (second runs) | foul condensate |

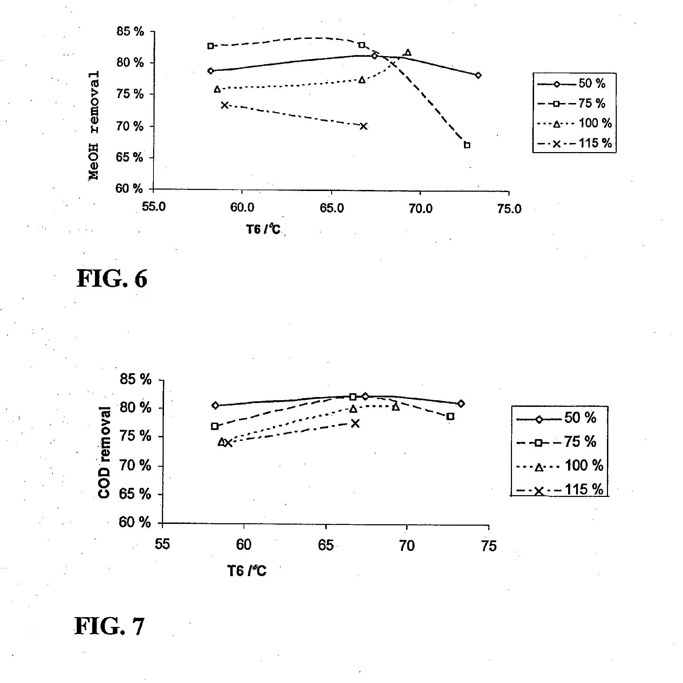

The test results are presented in Figures 6-9. Figures 6 and 7 show methanol and COD removal at different condensate temperatures (°C) when the evaporation plant is running at 80% capacity. Figure 6 shows methanol removal when the evaporation plant is running at 80% capacity, the parameter is the ratio of secondary condensate flow rate to vapor rate. Figure 7 shows COD removal when the evaporation plant is running at 80% capacity, the parameter is the ratio of secondary condensate flow rate to vapor rate.

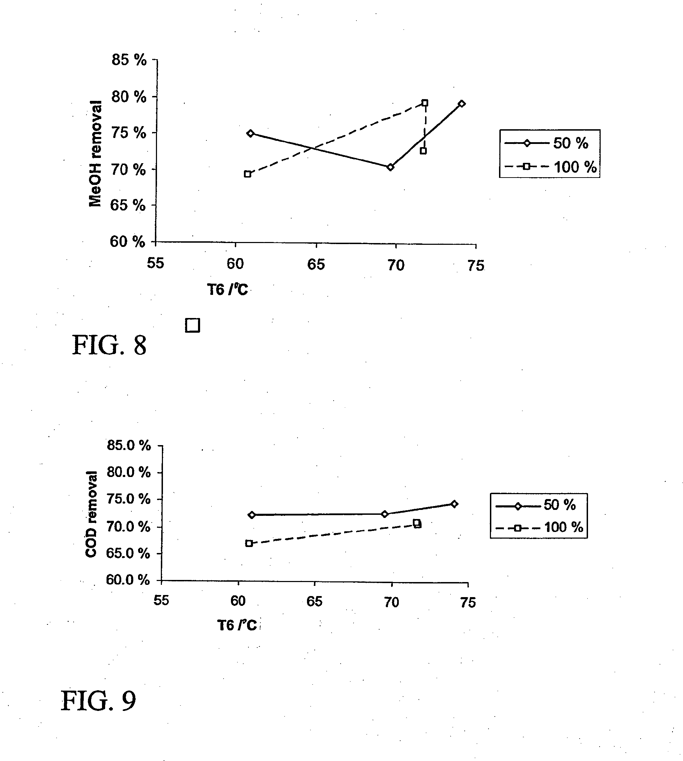

Figures 8 and 9 show methanol and COD removal at different condensate temperatures (°C) when the evaporation plant is running at 100% capacity. Figure 8 shows MeOH removal when the evaporation plant is running at 100% capacity, the parameter is the ratio of secondary condensate flow rate to vapor rate. Figure 9 shows COD removal when the evaporation plant is running at 100% capacity, the parameter is the ratio of secondary condensate flow rate to vapor rate. The legend parameter 100%, in Figures 6 to 9 means that sprayed condensate mass flow is equal to the mass flow of water vapor from effect 5, at either 80% or 100 % evaporation plant capacity. Similarly, legend names (50%, 75%, 115%) in Figures 6 to 7, mean that the ratio of sprayed condensate mass flow to the mass flow of vapor from effect 5, is (50%, 75%, 115%) when the evaporation plant capacity is 80 %.

According to the results, removals from heated condensate ("hot" spray) are higher than those from cold spray condensate. This is because "equilibrium" or "hot" spray condensates have more vapor to which they can donate their MeOH and less net mass transfer of water vapor to overcome, see Figures 6 to 9. Lower removal rates at 100% evaporation capacity are caused by a smaller reactor volume (droplets are carried by the fast flowing vapor) and a smaller wetted wall area giving a shorter residence time, $\tau$, for the sprayed condensate.

Conductivity trends during test runs: Conductivity data was gathered from the plants total secondary condensate stream during the tests at 80% evaporation capacity, see Figure 11. A recorded change in conductivity then is mainly caused by a change in TRS compounds, which are more conductive than MeOH. It can be seen that the conductivity of secondary condensate 2 decreases immediately after the spraying is started (at point "Ref 1") and continues to decrease when the spraying volume is increased from 50% to 115% flow (the spraying was stopped at point "Ref 2"). Points 2 to 11 are therefore trial run numbers for a set of field tests where the ratio of secondary condensate to vapor flow and the temperature of the sprayed secondary condensate varies. The change in conductivity was therefore checked in a later test trial when running the evaporation plant at 100% capacity. Laboratory measurements of TRS removal from the vapor duct field tests were calculated to be more than 95 %, when the evaporation plant was run at 100% capacity.

The upper part of evaporators is typically equipped with a drop separator. When contaminated vapor is formed in an evaporator and led through a vapor duct of the evaporator, a contaminant-lean liquid is sprayed into the vapor flow for separating detrimental particles and components from the vapor. This may contribute to or even replace the operation of the drop separator, at least to some extent.

Important factors increasing duct stripper function:

A) Importance of the liquid film on the duct surfaces (wall film) and the formation of the wall film (starting point of film).
B) Droplet size reduction is increased when spraying countercurrently to a high velocity vapor flow.
C) Shorter residence time in vapor duct at increasing evaporation capacity lowers removal efficiency.

The novel separation method of the present invention secures cleaner secondary condensates by spraying methanol or/and TRS -enriched condensates into vapor ducts and collecting the clean condensate either from the vapor duct bottom before the evaporator or together with evaporator clean condensate.

Field measurements have shown that methanol removal efficiency of a duct stripper can have mill-wide effects on MeOH segregation. Measured duct stripper separation in a full scale plant has been proven to be ca 70% to 90%. This makes it possible to increase the methanol recovery by 1-3 kg methanol/ton pulp. This method could hence in Finland increase methanol recovery to methanol fuel by many millions of tons per year. Thereto odor releases decrease as well as a need to use fresh raw water in such places where the use of odorous condensates is not allowed, e.g. at a lime mud filter at the causticizing plant of the pulp mill. This method makes it hence possible to decrease fresh water consumption and heating of fresh water to process temperature. It can thus also help to reduce the flow of effluent and the corresponding effluent treatment costs. Duct stripping is a cost-effective method and can motivate segregation system investments which in some cases can be as high as 1 euro/t pulp when looking at a one year pulp production, i.e. 1000000 t pulp/year could motivate an overall investment into the condensate segregation system of 1,000,000 euro.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims. The present invention is described above in more detailed in connection with black liquor evaporation in lamella evaporators. The present invention, in which liquid is sprayed to vapor in a vapor duct, is applicable to all known kind of evaporators. The evaporator process can be carried out in a multi-effect evaporation plant or a single evaporator effect plant such as a vapor recompression plant run by a fan or steam ejector.

**Claims**

1.  A method for purification of liquids or vapors at an evaporation plant, **characterized by** separating contaminants from liquids by stripping when bringing a contaminant-enriched liquid into direct contact with a vapor by spraying or distributing the liquid into the vapor flowing in a vapor duct or onto wall surfaces in the vapor duct thus reducing the contaminant-content of the sprayed liquid and producing a cleaner liquid such that contaminants are enriched in the vapor, and collecting the cleaned liquid, or
    by separating contaminants from vapors by absorption when bringing a liquid into direct contact with a contaminated vapor by spraying or distributing a contaminant-cleaner liquid into the vapor flowing in a vapor duct or onto wall surfaces in the vapor duct thus increasing the contaminant-content of the sprayed liquid and producing a cleaned vapor, such that contaminants are enriched in the liquid and collecting the contaminant-enriched liquid.

2.  A method according to claim 1, **characterized in that** the cleaned liquid or contaminant-enriched liquid is removed either from the vapor duct, or together with the vapor condensate from the succeeding evaporator or the cleaned liquid or contaminant-enriched liquid is removed both from vapor duct and succeeding evaporator.

3.  A method according to claim 1 or 2, **characterized in that** the separation of contaminants is enhanced by prolonging the residence time of the liquid in the duct.

4.  A method according to claim 1, 2, or 3, **characterized in that** the separation of contaminants by stripping is enhanced by heating the contaminant-enriched liquid to saturation temperature or above saturation temperature of the vapor before spraying.

5.  A method according to any one of the preceding claims, **characterized in that** the methanol or/and TRS -enriched liquid to be stripped is sprayed countercurrently or co-currently.

6.  A method according to any one of the preceding claims, **characterized in that** methanol and/or TRS -enriched condensate is collected in an evaporation plant of a biomass plant, and the condensate is sprayed into a vapor duct.

7.  A method according to any one of the preceding claims, **characterized in that** methanol or/and TRS -enriched liquid is cleaned in evaporator processes that are multi-effect plants or single effect plants, such as a vapor recompression plant run by a fan or steam ejector.

8.  A method according to any one of the preceding claims, **characterized in that** said liquid to be stripped is condensate and said contaminants are at least one of methanol and TRS.

9.  A method according to any one of the preceding claims, **characterized in that** the cleaned liquid is used as replacement liquid for fresh water within a mill.

10. A method according to any one of the previous claims, **characterized in that** the cleaned condensate collection point in the vertical duct is located after a curve at the bottom of the vapor duct outlet.

11. A method according to any one of the preceding claims, **characterized by** stripping contaminants from waste liquor condensate in any biomass-based pulping process.

12. A method according to any one of the preceding claims, **characterized by** absorbing contaminants from contaminated vapor flows in any biomass process.

13. A method according to any one of the preceding claims, **characterized in that** contaminated liquid or vapor are treated both at low pressure and elevated vapor pressure.

14. A method according to any one of the preceding claims, **characterized in that** the liquid is sprayed from or through the vapor duct surface.

15. A method according to any one of the preceding claims, **characterized in that** the liquid is fed from more than one spray nozzle.

16. A method according to any one of the preceding claims, **characterized in that** the film area in the duct is increased with internal duct elements.

17. An arrangement for purification of liquids or vapors at an evaporation plant having at least one evaporator vessel equipped with a vapor duct, **characterized in that** the vapor duct is provided with a device for spraying or distributing a liquid into the vapor flowing in a vapor duct or onto wall surfaces in the vapor duct in order to bring the liquid into direct contact with the vapor thus reducing the contaminant-content of the liquid or the vapor.

18. An arrangement according to claim 17, **characterized in that** the device comprises a feed pipe which extends through the vapor duct wall to the vapor duct and which is provided with at least one nozzle for spraying the liquid.

19. An arrangement according to claim 17, **characterized in that** the device comprises openings in the duct wall for distributing the liquid to the vapor duct.

20. An arrangement according to claim 17, 18 or 19, **characterized in that** the vapor duct is connected to a conduit for removing the liquid.

21. An arrangement according to any one of the preceding claims, **characterized in that** the vapor duct is arranged between two evaporator vessels of a multieffect evaporation plant.

22. An arrangement according to claim 20, **characterized in that** the liquid collection point in the vertical duct is located after a curve at the bottom of the vapor duct outlet.

23. An arrangement according to any one of the preceding claims, **characterized in that** the device is connected to a condensate system of the evaporation plant for leading condensate to the vapor duct.


**Patentansprüche**

1. Verfahren zur Reinigung von Flüssigkeiten oder Dämpfen in einer Eindampfungsanlage, **gekennzeichnet durch** Trennen von Verunreinigungen von Flüssigkeiten **durch** Strippen, wenn eine mit Verunreinigungen angereicherte Flüssigkeit mit einem Dampf in direkten Kontakt gebracht wird, und zwar **durch** Sprühen oder Verteilen der Flüssigkeit in den/dem Dampf, der in einem Dampfkanal strömt, oder auf Wandflächen in dem Dampfkanal, wodurch der Verunreinigungs-Gehalt der versprühten Flüssigkeit reduziert wird und eine sauberere Flüssigkeit derart erzeugt wird, dass Verunreinigungen in dem Dampf angereichert sind, und Sammeln der gereinigten Flüssigkeit, oder **durch** Trennen von Verunreinigungen von Dämpfen **durch** Absorption, wenn eine Flüssigkeit mit einem verunreinigten Dampf in direkten Kontakt gebracht wird, und zwar **durch** Sprühen oder Verteilen einer Verunreinigungs-Reinigungsflüssigkeit in den/dem Dampf, der in einem Dampfkanal strömt, oder auf Wandflächen in dem Dampfkanal, wodurch der Verunreinigungs-Gehalt der versprühten Flüssigkeit erhöht wird und ein gereinigter Dampf derart erzeugt wird, dass Verunreinigungen in der Flüssigkeit angereichert sind, und Sammeln der mit Verunreinigungen angereicherten Flüssigkeit.

2. Verfahren nach Anspruch 1 **dadurch gekennzeichnet, dass** die gereinigte Flüssigkeit oder die mit Verunreinigungen angereicherte Flüssigkeit entweder aus dem Dampfkanal oder zusammen mit dem Dampf-Kondensat aus dem darauf folgenden Verdampfer entfernt wird, oder die gereinigte Flüssigkeit oder die mit Verunreinigungen angereicherte Flüssigkeit sowohl aus dem Dampfkanal als auch aus dem darauf folgenden Verdampfer entfernt wird.

3. Verfahren nach Anspruch 1 oder 2 **dadurch gekennzeichnet, dass** die Trennung von Verunreinigungen durch Verlängern der Verweilzeit der Flüssigkeit in dem Kanal verbessert ist.

4. Verfahren nach Anspruch 1, 2 oder 3 **dadurch gekennzeichnet, dass** die Trennung von Verunreinigungen durch Strippen durch Erwärmen der mit Verunreinigungen angereicherten Flüssigkeit vor dem Sprühen auf eine Sättigungstemperatur oder über eine Sättigungstemperatur des Dampfes verbessert ist.

5. Verfahren nach einem der vorhergehenden Ansprüche, **dadurch gekennzeichnet, dass** die Methanol und/oder TRS-angereicherte Flüssigkeit, welche zu strippen ist, im Gleich- oder Gegenstrom versprüht wird.

6. Verfahren nach einem der vorhergehenden Ansprüche, **dadurch gekennzeichnet, dass** Methanol und/oder TRS-angereichertes Kondensat in einer Eindampfungsanlage einer Biomasseanlage gesammelt wird und das Kondensat in einen Dampfkanal gesprüht wird.

7. Verfahren nach einem der vorhergehenden Ansprüche, **dadurch gekennzeichnet, dass** Methanol und/oder TRS-angereicherte Flüssigkeit in Verdampfer-Prozessen gereinigt wird, die Mehrstufen-Anlagen oder Einzelstufen-Anlagen, wie eine Dampf-Rekompressionsanlage, die von einem Ventilator oder einer Dampfstrahlpumpe betrieben wird, sind.

8. Verfahren nach einem der vorhergehenden Ansprüche, **dadurch gekennzeichnet, dass** die Flüssigkeit, welche zu strippen ist, Kondensat ist, und die Verunreinigungen Methanol und/oder TRS sind.

9. Verfahren nach einem der vorhergehenden Ansprüche, **dadurch gekennzeichnet, dass** die gereinigte Flüssigkeit als Ersatz-Flüssigkeit für Frischwasser innerhalb eines Walzwerks verwendet wird.

10. Verfahren nach einem der vorhergehenden Ansprüche, **dadurch gekennzeichnet, dass** der Sammelpunkt für gereinigtes Kondensat in dem vertikalen Kanal nach einer Kurve am Boden des Dampfkanal-Auslasses angeordnet ist.

11. Verfahren nach einem der vorhergehenden Ansprüche **gekennzeichnet durch** Strippen von Verunreinigungen von Ablauge-Kondensaten in jedwedem Biomasse-basierten Aufschluss-Vorgang.

12. Verfahren nach einem der vorhergehenden Ansprüche **gekennzeichnet durch** Absorbieren von Verunreinigungen von verunreinigten Dampf-Strömungen in jedwedem Biomasse-Vorgang.

13. Verfahren nach einem der vorhergehenden Ansprüche, **dadurch gekennzeichnet, dass** verunreinigte Flüssigkeit oder verunreinigter Dampf sowohl bei niedrigem Druck als auch angehobenem Dampfdruck behandelt werden.

14. Verfahren nach einem der vorhergehenden Ansprüche, **dadurch gekennzeichnet, dass** die Flüssigkeit von oder durch die Dampfkanal-Fläche gesprüht wird.

15. Verfahren nach einem der vorhergehenden Ansprüche, **dadurch gekennzeichnet, dass** die Flüssigkeit von mehr als einer Sprühdüse zugeführt wird.

16. Verfahren nach einem der vorhergehenden Ansprüche, **dadurch gekennzeichnet, dass** der Niederschlags-Bereich in dem Kanal mit internen Kanalelementen vergrößert ist.

17. Anordnung zum Reinigen von Flüssigkeiten oder Dämpfen in einer Eindampfungsanlage mit zumindest einem Verdampfungs-Behälter, der einen Dampfkanal aufweist, **dadurch gekennzeichnet, dass** der Dampfkanal eine Vorrichtung zum Sprühen oder Verteilen einer Flüssigkeit in den/dem Dampf, der in einem Dampfkanal strömt, oder auf Wandflächen in dem Dampfkanal aufweist, um die Flüssigkeit in direkten Kontakt mit dem Dampf zu bringen, wodurch der Verunreinigungs-Gehalt der Flüssigkeit oder des Dampfes reduziert wird.

18. Anordnung nach Anspruch 17, **dadurch gekennzeichnet, dass** die Vorrichtung ein Zufuhrrohr aufweist, das sich durch die Dampfkanalwand zum Dampfkanal erstreckt und zumindest eine Düse zum Sprühen der Flüssigkeit aufweist.

19. Anordnung nach Anspruch 17, **dadurch gekennzeichnet, dass** die Vorrichtung Öffnungen in der Kanalwand zum Verteilen der Flüssigkeit in dem Dampfkanal aufweist.

20. Anordnung nach Anspruch 17, 18 oder 19, **dadurch gekennzeichnet, dass** der Dampfkanal mit einem Kanal zum Entfernen der Flüssigkeit verbunden ist.

21. Anordnung nach einem der vorhergehenden Ansprüche, **dadurch gekennzeichnet, dass** der Dampfkanal zwischen zwei Verdampfer-Behältern einer Mehrstufen-Eindampfungsanlage angeordnet ist.

22. Anordnung nach Anspruch 20, **dadurch gekennzeichnet, dass** der Flüssigkeits-Sammelpunkt in dem vertikalen Kanal nach einer Kurve am Boden des Dampfkanal-Auslasses angeordnet ist.

23. Anordnung nach einem der vorherigen Ansprüche, **dadurch gekennzeichnet, dass** die Vorrichtung mit einem Kondensat-System der Eindampfungsanlage zum Leiten von Kondensat zum Dampfkanal verbunden ist.

**Revendications**

1. Procédé de purification de liquides ou de vapeurs dans une installation d'évaporation, **caractérisé par** la séparation de contaminants des liquides par strippage lorsqu'un liquide enrichi en contaminant est amené en contact direct avec une vapeur par pulvérisation ou distribution du liquide dans la vapeur circulant dans un conduit de vapeur ou sur des surfaces de paroi dans le conduit de vapeur, réduisant ainsi la teneur en contaminant du liquide pulvérisé et produisant un liquide plus propre de sorte que les contaminants soient enrichis dans la vapeur, et récupération du liquide purifié, ou
par la séparation de contaminants des vapeurs par absorption lorsqu'un liquide est amené en contact direct avec une vapeur contaminée par pulvérisation ou distribution d'un liquide plus propre en contaminants dans la vapeur circulant dans un conduit de vapeur ou sur des surfaces de paroi dans le conduit de vapeur, augmentant ainsi la teneur en contaminant du liquide pulvérisé et produisant une vapeur purifiée, de sorte que les contaminants soient enrichis dans le liquide, et récupération du liquide enrichi en contaminant.

2. Procédé selon la revendication 1, **caractérisé en ce que** le liquide purifié ou le liquide enrichi en contaminants est éliminé soit du conduit de vapeur, soit conjointement avec le condensat de vapeur de l'évaporateur en aval, ou le liquide purifié ou le liquide enrichi en contaminants est éliminé à la fois du conduit de vapeur et de l'évaporateur en aval.

3. Procédé selon la revendication 1 ou 2, **caractérisé en ce que** la séparation de contaminants est améliorée en prolongeant le temps de séjour du liquide dans le conduit.

4. Procédé selon la revendication 1, 2 ou 3, **caractérisé en ce que** la séparation de contaminants par strippage est améliorée en chauffant le liquide enrichi en contaminants jusqu'à la température de saturation ou au-dessus de la température de saturation de la vapeur avant la pulvérisation.

5. Procédé selon l'une quelconque des revendications précédentes, **caractérisé en ce que** le liquide enrichi en méthanol et/ou SRT à épurer par strippage est pulvérisé à contre-courant ou à co-courant.

6. Procédé selon l'une quelconque des revendications précédentes, **caractérisé en ce que** le condensat enrichi en méthanol et/ou SRT est récupéré dans une installation d'évaporation d'une centrale à biomasse, et le condensat est pulvérisé dans un conduit de vapeur.

7. Procédé selon l'une quelconque des revendications précédentes, **caractérisé en ce que** le liquide enrichi en méthanol et/ou SRT est purifié dans des processus d'évaporateur qui sont des installations à effets multiples ou des installations à effet unique, tels qu'une installation de recompression de vapeur alimentée par un ventilateur ou un éjecteur à vapeur.

8. Procédé selon l'une quelconque des revendications précédentes, **caractérisé en ce que** ledit liquide à épurer par strippage est un condensat et lesdits contaminants sont au moins l'un du méthanol et du SRT.

9. Procédé selon l'une quelconque des revendications précédentes, **caractérisé en ce que** le liquide nettoyé est utilisé comme liquide de remplacement d'eau douce au sein d'une usine.

10. Procédé selon l'une quelconque des revendications précédentes, **caractérisé en ce que** le point de récupération du condensat purifié dans le conduit vertical est situé après une courbe au fond de la sortie du conduit de vapeur.

11. Procédé selon l'une quelconque des revendications précédentes, **caractérisé par** le strippage de contaminants à partir d'un condensat de liquide résiduel dans tout processus de réduction en pâte à base de biomasse.

12. Procédé selon l'une quelconque des revendications précédentes, **caractérisé par** l'absorption de contaminants provenant d'écoulements de vapeurs contaminées dans tous processus de biomasse.

13. Procédé selon l'une quelconque des revendications précédentes, **caractérisé en ce que** le liquide ou la vapeur contaminés sont traités à la fois à une pression de vapeur basse et à une pression de vapeur élevée.

**14.** Procédé selon l'une quelconque des revendications précédentes, **caractérisé en ce que** le liquide est pulvérisé à partir de ou à travers la surface du conduit de vapeur.

**15.** Procédé selon l'une quelconque des revendications précédentes, **caractérisé en ce que** le liquide est amené par plus d'une buse de pulvérisation.

**16.** Procédé selon l'une quelconque des revendications précédentes, **caractérisé en ce que** la surface du film dans le conduit est augmentée par des éléments de conduit interne.

**17.** Agencement de purification de liquides ou de vapeurs dans une installation d'évaporation ayant au moins une cuve d'évaporateur équipée d'un conduit de vapeur, **caractérisé en ce que** le conduit de vapeur est doté d'un dispositif pour pulvériser ou distribuer un liquide dans la vapeur circulant dans un conduit de vapeur ou sur des surfaces de paroi dans le conduit de vapeur afin d'amener le liquide en contact direct avec la vapeur de sorte à réduire la teneur en contaminants du liquide ou de la vapeur.

**18.** Agencement selon la revendication 17, **caractérisé en ce que** le dispositif comprend un tuyau d'alimentation qui s'étend à travers la paroi du conduit de vapeur vers le conduit de vapeur et qui est doté d'au moins une buse pour pulvériser le liquide.

**19.** Agencement selon la revendication 17, **caractérisé en ce que** le dispositif comprend des ouvertures dans la paroi de conduit pour distribuer le liquide dans le conduit de vapeur.

**20.** Agencement selon la revendication 17, 18 ou 19, **caractérisé en ce que** le conduit de vapeur est relié à un conduit destiné à retirer le liquide.

**21.** Agencement selon l'une quelconque des revendications précédentes, **caractérisé en ce que** le conduit de vapeur est agencé entre deux cuves d'évaporateur d'une installation d'évaporation à effets multiples.

**22.** Agencement selon la revendication 20, **caractérisé en ce que** le point de récupération de liquide dans le conduit vertical est situé après une courbe au fond de la sortie de conduit de vapeur.

**23.** Agencement selon l'une quelconque des revendications précédentes, **caractérisé en ce que** le dispositif est relié à un système de condensat de l'installation d'évaporation pour amener le condensat vers le conduit de vapeur.

FIG. 1

FIG. 2

FIG. 3

FIG. 4

FIG. 5

**FIG. 6**

**FIG. 7**

FIG. 8

FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6797125 B

- US 6258206 B